# EUROPEAN PATENT SPECIFICATION

(11) **EP 0 547 128 B1**
(45) Date of publication and mention of the grant of the patent: **15.03.1995**
(21) Application number: 91916356.8
(22) Date of filing: 04.09.1991
(51) Int. Cl.: H02G 3/06, H02G 3/26

(54) **CABLE TRAY SYSTEMS AND CONNECTING DEVICES THEREFOR**
KABELKANALSYSTEME UND VERBINDUNGSVORRICHTUNGEN DAFÜR
SYSTEMES DE TABLETTES DE CABLES ET DISPOSITIFS D'ASSEMBLAGE POUR CES SYSTEMES

(30) Priority: 06.09.1990 GB 9019495
(43) Date of publication of application: 23.06.1993
(73) Proprietor: SWIFTS OF SCARBOROUGH LIMITED, Eastfield Scarborough YO11 3BY (GB)
(72) Inventor: ATKINSON, David, Stephen 54 Redscar Drive Newby, North Yorkshire YO12 5RQ (GB)
(74) Representative: Denmark, James
(86) International application number: GB9101502
(87) International publication number: WO9204755

(56) References cited:
- DE-U- 8 901 613
- FR-A- 1 577 506
- FR-A- 2 044 101
- FR-A- 2 540 946
- FR-A- 2 594 186
- US-A- 4 716 632

## Description

This invention relates to connecting devices, and has particular reference to the coupling together of the components of cable tray systems. The invention also provides cable tray systems embodying coupling devices.

Cable tray systems comprise a number of components which may or may not be used in any particular installation, depending upon requirements, but the main components, which are always used comprise cable trays. A cable tray is a length of channel member having a base and side flanges and serves to hold cables, service pipes and the like. It has apertures in the base thereof and sometimes the flanges have apertures. Cable trays may be connected end to end by coupling plates or by overlapping the cable tray ends. Where coupling plates are used they are components of the system.

The system may also include what are known as accessories which serve mainly to couple cable trays which lie at an angle to one another the accessory also having apertures and being adapted to overlap the cable tray end.

Finally, it is usual for the system to include mounting brackets- on which the cable trays are supported, said mountings also having apertures.

The purposes of the apertures in the components is to enable the components to be secured together by screws or bolts on the one hand, but the apertures in the cable tray sections and the accessories also enable the cables and pipes to be secured to the system by the user of flexible ties or the like.

Cable trays comprise basically a strip of sheet material, typically metal, which has its edges bent upwardly so that the strip takes up a shallow U-sectioned shape. To form supports for cables and pipes in factories and offices, these cable trays must be connected end to end to form long lengths of cable tray installation, and by the conventional method of coupling cable trays end to end a considerable amount of time is required because the couplings are usually made using coupling pieces and nuts and bolts. The cable tray sides may have plain ends, and it is simple to "joggle" one end of one cable tray to receive the adjacent end of another cable tray whereby the coupling members are not required although nuts and bolts are still used for the connection. Where the sides or flanges of the tray are of the "returned" nature wherein the free edges are inwardly turned, it is usual to use coupling pieces which overlap adjacent tray ends in place of the joggling referred to above.

It has been long recognised as indicated above that the establishment of the connections either in end to end coupling of cable trays or the coupling of cable trays to mountings and accessories is time consuming and laborious. Furthermore having regard to the working environment, typically in buildings and in ceiling and underfloor voids thereof, utilisation of nuts and bolts is tedious, and frequently the workmen installing the cable tray systems do not carry out the coupling task properly through tedium, and either the nuts and bolts are not properly tightened, or are simply omitted.

Any means whereby a reduction in the time taken to make the respective couplings can be achieved would therefore represent a significant advance in the art.

Attempts have of course been made to reduce this coupling time and for example we have proposed that where cable trays are to be connected to accessories such as T-plates or other accessories, the accessories are provided with integral coupling tongues which reduces coupling time in that the coupling components are eliminated.

It has already been proposed, in French Patent No 2044101 to couple cable tray components using springs of spring plate material bent to U-shape in conjunction with locking rods. The springs are passed through aligned apertures in the components when overlapped, and the rods are fed between the spring ends to lock them in position.

Also, French Patent 2594186 describes that wire rod springs bent into S-shape can be used for holding together plate components which are overlapped and have aligned apertures.

Finally, German Model Patent No G8901613.0 shows that spring devices of various configurations can be used in cable tray systems.

There is however an on-going need to improve the coupling arrangements with a view to reducing the time required to install cable tray systems.

According to the present invention there is provided spring means for coupling cable tray components of a cable tray system comprising a shaped spring member formed from spring rod material and having a section for fitting in aligned apertures of overlapped cable tray components to couple same, and arms which extend from said section to free extremities thereof characterised in that said free extremities have steps thereon which are adapted to be sprung into an aperture in at least one of said components.

Preferably, the spring member in the form of a length of spring steel rod formed in substantially V-configuration defining two arms of equal length, and where the arms meet, the spring steel rod is bent to form a step comprising first and second portions at right angles to each other defining said section.

According to the invention in another aspect, there is provided a cable tray system characterised in that the components of the system are coupled by wire rod springs of generally V-configuration which are clipped into coupling arrangement by insertion of a formed end at the apex of the V-shape, into selected ones of the apertures in the cable tray system components, the legs of the V-shapes are pushed together and formations at the leg extremities are inserted into other selected ones of the apertures in the cable tray system components to be springingly held therein.

By the utilisation of the invention, it will be understood that it may not be necessary to use any nuts and bolts for effecting the coupling of cable tray ends or cable trays to their mountings or accessories. Utilisation of the springs formed from spring rod material as aforesaid simplifies installation considerably, and at present estimates couplings of cable tray ends using coupling pieces can be made using the springs in up to 1/10th of the time required to establish the same couplings using nuts and bolts.

In order to provide further explanation of the invention, an embodiment thereof will now be described by way of example, with reference to the accompanying drawings, wherein:-
Fig. 1 is a perspective view showing how adjacent ends of cable trays are coupled conventionally;
Fig. 2 is a perspective view somewhat similar to Fig. 1, but showing how the same cable tray ends are connected in accordance with the embodiment of the present invention;
Figs. 3, 4, 5 and 6 respectively are a plan, side elevation, end elevation and perspective view of the coupling spring shown in Fig. 2;
Fig. 7 shows in perspective view the cable trays of Fig. 2 when assembled using the coupling spring of Figs. 3 to 6;
Fig. 8 is a plan illustrating how the apertures in the coupling piece may be arranged to enable the coupling piece either to be used with the spring of Figs. 3 to 6 or in the conventional arrangement shown in Fig. 1;
Figs. 9, 10, 11 and 12 show various circumstances wherein a cable tray is connected to a mounting and wherein a spring as shown in Figs. 3 to 6 may be used for the coupling of the cable tray to the mounting;
Fig. 13 shows how the spring may be used to couple a cable tray end to an accessory;
Fig. 14 shows in enlarged perspective view how a spring is used in conjunction with an indicator/retention clip; and
Fig. 15 shows the arrangement of Fig. 14 when assembled.

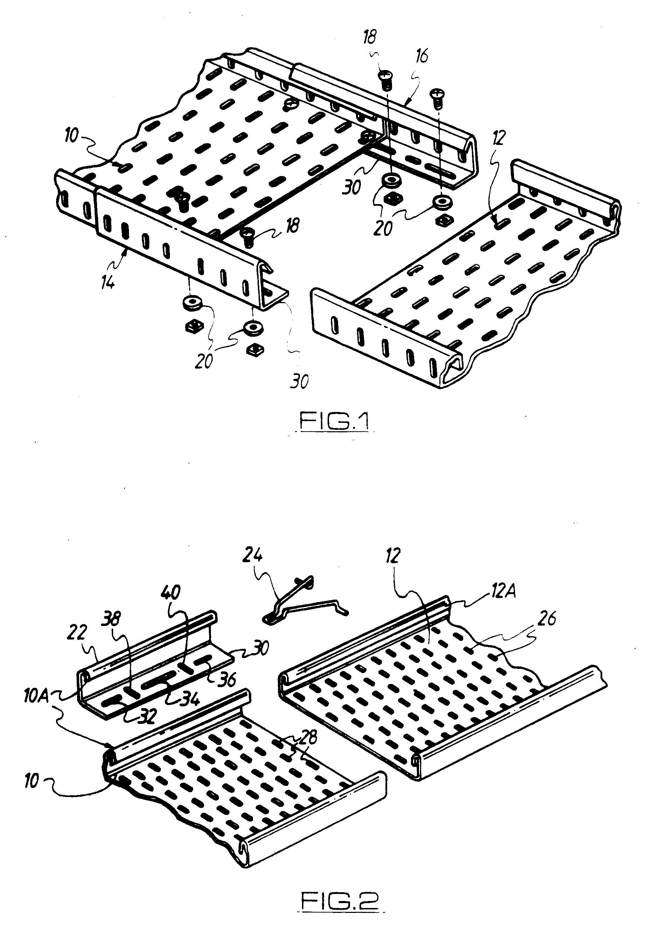

Referring to the drawings, in Fig. 1 two cable tray ends 10 and 12 to be butted and connected are shown, and also shown are two coupling pieces 14 and 16. As will be understood from the illustration of Fig. 1, the ends 10 and 12 are inserted into the coupling pieces 14 and 16, and then the ends are connected by screwing same respectively to the coupling pieces using the nuts and bolts 18, 20. Coupling by the method shown in Fig. 1 takes a considerable length of time in view of the need to insert the bolts and to tighten the nuts, and the present invention seeks to overcome this difficulty.

In the embodiment of the invention shown in Fig. 2, the cable tray ends to be coupled are again indicated by reference numerals 10 and 12, and a coupling piece 22 is similar to each coupling piece 14 and 16 except for the layout of apertures therein. It is appreciated that two of the said coupling pieces 22 will be used when coupling the ends 10 and 12. Fig. 2 also shows the coupling springs 24 in accordance with the embodiment of the invention.

Before describing the spring in detail, it should be noted that the cable tray ends 10 and 12 are of the return flange type in that the flanges 10A and 12A are inwardly turned as shown, and the coupling pieces 22 have a similar cross section except that they are larger in dimension so that the cable tray ends can fit into same as shown in Fig. 1. Also each of the cable trays 12 and 10 has a pattern of holes 26, 28 therein, and in accordance with an aspect of the present invention, these holes should be utilised for the coupling of the cable tray ends. The holes 26 and 28 are elongated in nature, and extend with their length direction transverse to the length direction of the cable tray. The holes are arranged in rows which are alternately staggered one relative to the other. The holes are arranged at a particular pitching, and that pitching is preserved across butted ends of adjacent cable trays 10 and 12.

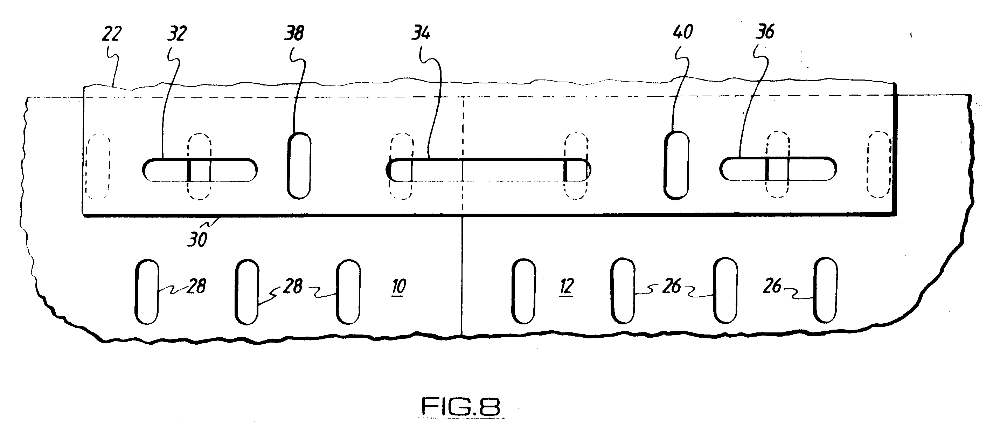

In the layout of holes on the base flanges 30 of the coupling pieces 14 and 16 as shown in Fig. 1, alternate long and short aligned elongated holes are provided, but in the arrangement in the coupling piece 22 shown in Fig. 2 and also in greater detail in Fig. 8, elongated holes 32, 34 and 36 lie with their length direction aligned and in the length direction of the coupling piece, whereas the alternate holes 38 and 40 are elongated but lie transversely of the length direction of the coupling piece 22, and in fact register with elongated holes of similar length in the cable trays 10 and 12 when arranged in abutting contact.

The layout of holes 32 to 40 is selected so that the holes may be used for a spring clip 24 as shown in Fig. 2, or alternatively may accommodate the conventional fixing bolts as shown in Fig. 1 for more conservative customers who wish to continue using the nut and bolt method.

Compared to the Fig. 1 arrangement, the only modification of hole arrangement therefore is in relation to the base portions 30 of the coupling pieces 14 and 16 so that they become as illustrated in Figs. 2 and 8 in relation to the coupling piece 22.

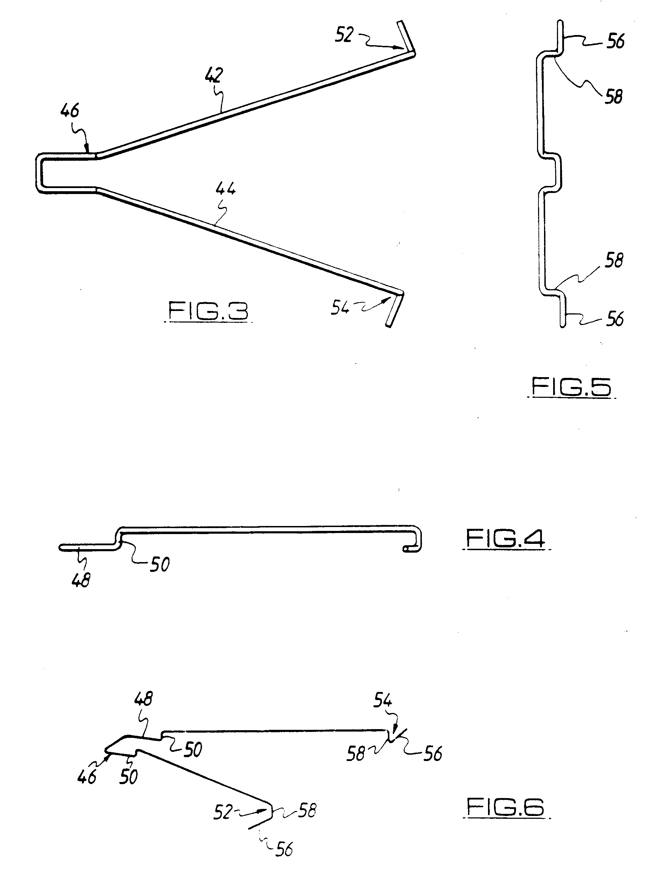

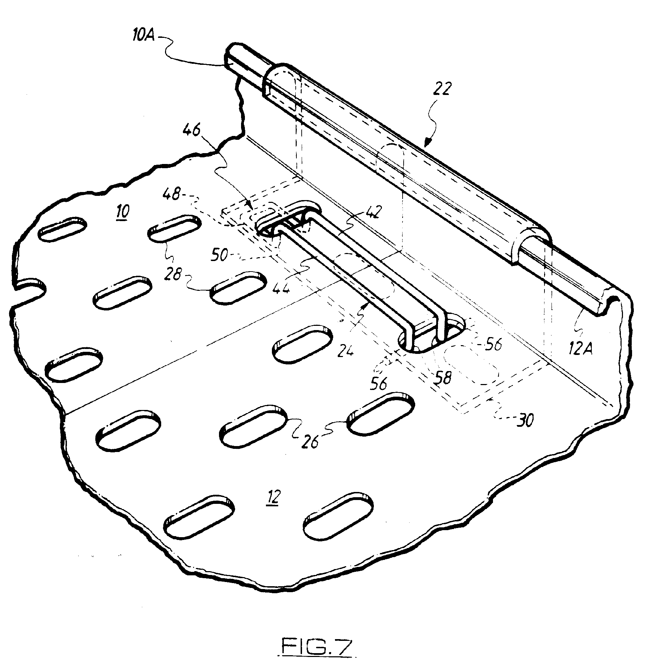

In this embodiment of the invention, the coupling of the cable tray ends is achieved by means of the coupling spring 24 in the manner as shown in Fig. 7. The spring is shown in some detail in Figs. 3 to 5, and will be seen to comprise a length of spring steel rod which is bent to the configuration shown. The spring is essentially V-shaped as shown in Fig. 3 when unstressed, and it has arms 42 and 44 which extend from a stepped portion 46 which as shown in Fig. 4 comprises a first section 48 which lies parallel to the plane containing the arms 42 and 44, and a second section 50 which lies at right angles to a plane containing the arms 42 and 44.

At each free end of each arm 42 and 44 is a further stepped formation 52 and 54 each comprising a locking limb 56 which lies in a plane parallel to the plane containing the arms 42 and 44 and in fact in the same plane as section 48, and a connecting leg 58 lying at right angles to the locking limb 56.

From the foregoing description, it is believed that the method of coupling the cable tray ends will be readily understood. The ends of the cable trays 10 and 12 are introduced into the two coupling pieces 22, as shown in Fig. 7. The shoulder end 46 is inserted by the portion 48 into aligned apertures in the coupling piece bottom 30 and the base of the cable tray end 10, as illustrated in Fig. 7, the spring 24 is gripped by the fingers and stressed by pivoting the arms 42 and 44 together. The now closely adjacent end formations 52 are together inserted into aligned apertures in the coupling piece base 30, and in the cable tray end 12, and the shoulder portion 48 lies to the underside of the base of tray 10, thereby completing the coupling.

A similar coupling is made at the other side of the joint.

The coupling therefore of cable tray ends by the means described can take place simply and easily and in a fraction of the time it takes to insert and tighten the nuts and bolts shown in the arrangement of Fig. 1. By virtue of the aperture pattern in each of the coupling pieces, it is also possible still to use the nut and bolt arrangement as shown in Fig. 1.

Also, it is possible to use the spring clip for the coupling of overlapped cable tray ends, when no coupling piece may be needed.

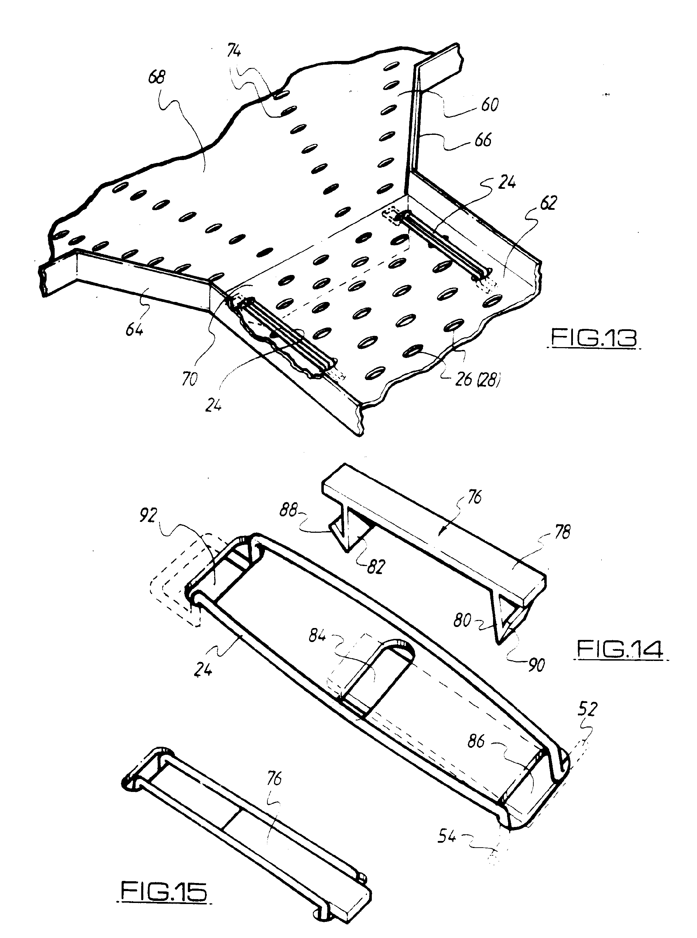

It is convenient now to refer to Figs. 13, 14 and 15 to illustrate and describe extended uses of the spring coupling system according to the invention and modifications thereof.

In the arrangement of Fig. 13, an accessory 60 is shown as being coupled to the end of a cable tray 62 which is similar to the cable trays 10 and 12 already described.

The accessory 60 has side flange portions 64 and 66, which are spaced to define a coupling region at which a base plate 68 of the accessory is provided with an extension fish plate 70.

The fish plate 70 is provided with apertures which register with apertures 26 (28) in the cable tray 62 when the fish plate is located under the cable tray base. Springs 24 are then inserted as shown and as described herein so that the end formations 46 of the springs are fitted behind the underside of the fish plate. The end formations 52 and 54 of the springs 24 are simply inserted in one of the apertures 26 or 28 in the base of the cable tray 62 which aperture simply acts as a holding means for the spring without performing any coupling together of components of the cable tray system.

Thus, the springs can be used in various applications for coupling components in a cable tray system and only one end of the spring may perform the coupling function. Additionally, either end can be used to perform the coupling function. For example, instead of the springs being arranged as shown in Fig. 13, they could be arranged with the ends 52 and 54 performing the coupling function between the fish plate 70 and the base of the cable tray 62, the end formations 46 simply being located in spaced apertures in the base plate.

It will be appreciated that the springs must be dimensioned so as to fit into the aperture pattern in the base plate. The geometrical arrangement of the aperture pattern and the design of same in relation to all of the components of the cable tray system may in fact be selected and designed so that regardless of how the various components are arranged relatively, there will always be sufficient registration between apertures in the various components so that the springs can be used. To explain more fully, it should be mentioned that cable trays sometimes have to be cut on site so as to fit into a particular system. Cable trays are usually manufactured in standard lengths, and often standard lengths will not be appropriate in a particular installation. If the fitter therefore cuts the cable tray on site, the aperture pattern should be arranged so that regardless of where he cuts the end of the cable tray, the cable tray will still be capable of being positioned in relation to its adjacent component to which it is to be coupled, in proper fashion, and the springs will still be capable of application to perform their function. This applies not only to the aperture pattern in the cable tray, but also to the aperture pattern in the accessory, such as that illustrated by reference 74 in Fig. 13, and also to the aperture pattern in the mounting brackets.

Figs. 14 and 15 show an additional feature of the present invention which has shown itself to be particularly useful. The additional feature comprises a retention and indication clip 76 which is simply a plastics material strip 78 with spaced legs 80 and 82. These legs are spaced at the pitching between aligned apertures in the cable tray base so that the clip can be inserted in a pair of apertures such as 84 and 86 in Fig. 14. The legs 80 and 82 have hook formations 88 and 90 so that the clips will spring into the apertures 84 and 86 and cannot be removed without difficulty or without destroying the clip.

In the arrangement shown in Fig. 14, the spring holding device 24 spans three aligned apertures 92, 84 and 86. Fig. 15 shows the arrangement after the clip 76 has been applied. The clip serves two purposes namely to keep the ends 52 and 54 of the spring locked in position in aperture 86 so that they will not escape in use, and secondly the presence of the clip 76 indicates to a fitter at a glance that the installation of the springs 24 has been completed properly.

As can be appreciated the clips 76 which may be in a distinctive colour are simply inserted in the pair of apertures such as 84 and 86 by a downwards pressing action. The clips 76 can be used and are adapted to be used wherever the springs 24 are used.

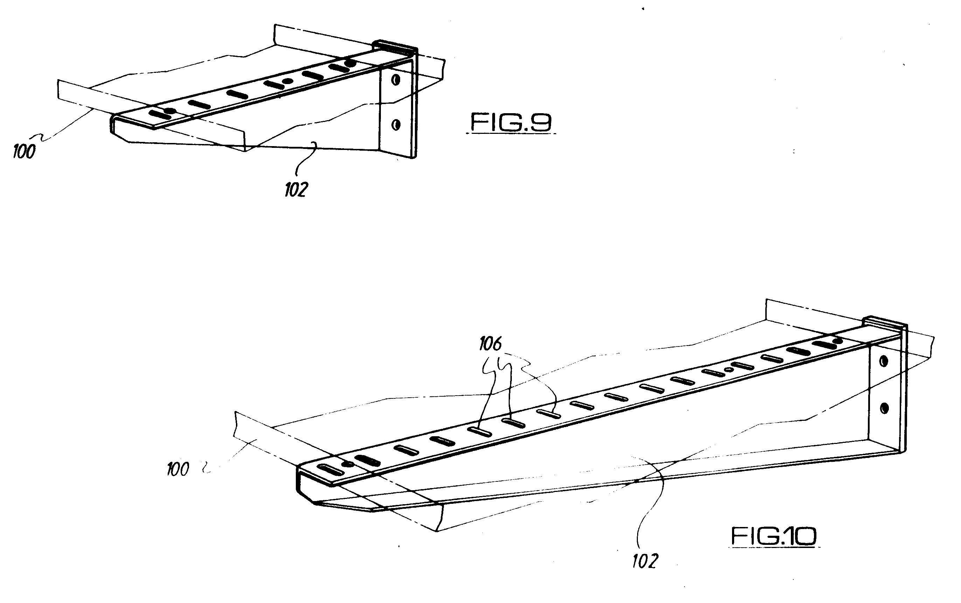

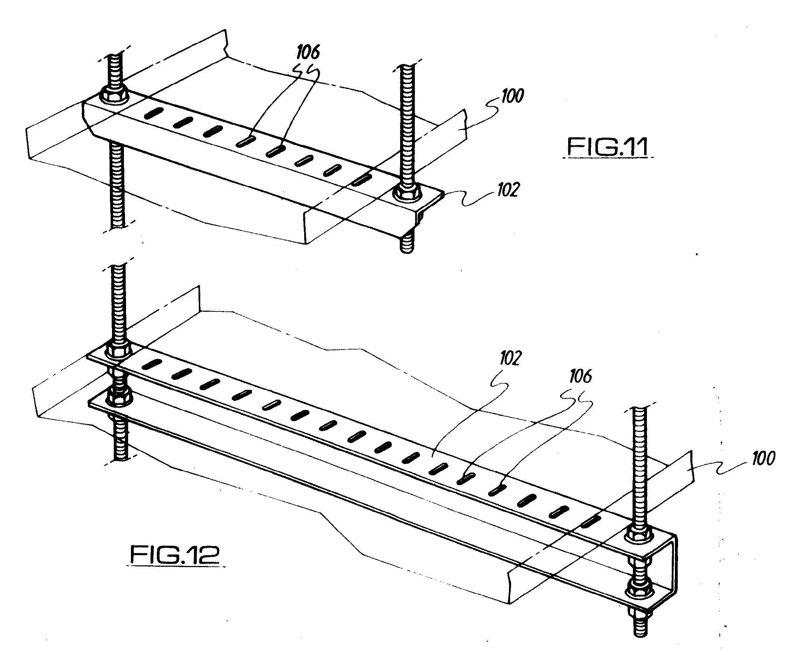

Figs. 9 to 12 show various arrangements wherein cable trays 100 can be coupled to mounting brackets or hangers 102. To use the spring arrangement as shown in previous figures, it may be necessary to alter the hole pattern 106 in the appropriate mounting member 102 so that the coupling springs can be received through apertures in the cable tray and the mounting in the manner as illustrated in Fig. 7.

Although one particular form of spring clip has been illustrated and described, it is envisaged that possibly the design could be modified depending upon how any particular coupling is constructed.

The more the clips can be used e.g. for coupling cable tray ends and for coupling cable trays to mounting brackets and accessories, the greater the amount of time which can be saved during installation.

## Claims

1. Spring means for coupling cable tray components (10,12) of a cable tray system comprising a shaped spring member (24) formed from spring rod material and having a section (46) for fitting in aligned apertures (26,28) of overlapped cable tray components (10,12) to couple same, and arms (42,44) which extend from said section (46) to free extremities (52,54) thereof, characterised in that said free extremities have steps (56,58) thereon which are adapted to be sprung into an aperture (26,28) in at least one of said components.

2. Spring means according to claim 1, characterised in that the spring member (24) is in the form of a length of spring steel rod formed in substantially V-configuration defining two arms (42,44) of equal length, and where the arms meet, the spring steel rod is bent to form a step (46) comprising first and second portions (48,50) at right angles to each other and defining said section.

3. Spring means according to claim 1 or 2, characterised in that the step (56,58) at each extremity is a right angled step.

4. Spring means according to claim 3, characterised in that the steps (56,58) at the extremities face in opposite directions.

5. An assembly characterised by aligned cable tray ends (10,12) connected by at least one coupling piece (14) and a spring means (24) as claimed in any of claims 1 to 4, or by a cable tray (10) connected to a mounting (102) or accessory (68) by a spring means (24) as claimed in any of claims 1 to 4.

6. A cable tray system characterised in that the components (10,12) of the system are coupled by wire rod springs (24) of generally V-configuration which are clipped into coupling arrangements by insertion of a formed end (46) at the apex of the V-shape, into selected ones (26) of the apertures in the cable tray system components (10,12), the legs (42,44) of the V-shapes are pushed together and formations (52,54) at the leg extremities are inserted into other selected ones (28) of the apertures in the cable tray system components to be springingly held therein.

7. A system according to claim 6, characterised by indicator and securement clips (76) which are inserted in at least those other selected ones of apertures (28) of the cable tray system components (10,12) in which the formations (52,54) at the leg extremities are inserted and lie between the spring legs (42,44).

## Patentansprüche

1. Federvorrichtung zum Verbinden von Kabelschienenkomponenten (10, 12) eines Kabelschienensystems, mit einem geformten Federorgan (24), welches aus Federstahlmaterial gebildet ist und folgende Merkmale aufweist:
- einen Abschnitt (46) zum Eingriff in fluchtende Öffnungen (26, 28) von sich überlappenden Schienenkomponenten (10, 12), um letztere zu verbinden, und
- Schenkel (42, 44), welche von dem Abschnitt (46) aus zu ihren freien Enden (52, 54) verlaufen,
**dadurch gekennzeichnet,** daß die freien Enden (52, 54) Stufen (56, 58) aufweisen, welche für einen federnden Eingriff in eine Öffnung (26, 28) in wenigstens einer der Komponenten ausgebildet sind.

2. Federvorrichtung nach Anspruch 1, **dadurch gekennzeichnet,** daß das Federorgan (24) aus einem Längenabschnitt eines Federstahlstabes mit im wesentlichen V-Form unter Ausbildung von zwei Schenkeln (42, 44) gleicher Länge besteht, wobei dort, wo sich die Schenkel treffen, der Federstahlstab unter Ausbildung einer Stufe (46) gebogen ist, welche erste und zweite, zueinander rechtwinklige Stücke (48, 50) aufweist und den Abschnitt (46) definiert.

3. Federvorrichtung nach Anspruch 1 oder 2, **dadurch gekennzeichnet,** daß die Stufe (56, 58) an jedem freien Ende eine rechtwinklige Stufe ist.

4. Federvorrichtung nach Anspruch 3, **dadurch gekennzeichnet,** daß die Stufen (56, 58) an den freien Enden in einander entgegengesetzte Richtungen verlaufen.

5. Anordnung, **gekennzeichnet durch,**
- fluchtende Kabelschienenenden (10, 12), welche zumindest durch ein Verbindungsstück (14) und ein Federorgan (24) gemäß einem der Ansprüche 1 bis 4 miteinander verbunden sind, oder
- eine Kabelschiene (10), die an einer Tragleiste (102) oder einem Zusatzteil (68) durch ein Federorgan (24) gemäß einem der Ansprüche 1 bis 4 befestigt ist.

6. Kabelschienensystem, **dadurch gekennzeichnet,** daß die Komponenten (10, 12) des Systems durch Walzdrahtfedern von im wesentlichen V-Form miteinander verbunden sind, welche in Verbindungsanordnungen durch Einsetzen eines Formendes (46) am Scheitel der V-Form in ausgewählte Öffnungen (26) in den Kabelschienenkomponenten (10, 12) federnd eingerastet sind, wobei die Schenkel (42, 44) der V-Formen zusammengedrückt und Ausformungen (52, 54) an den Schenkelenden in andere ausgewählte Öffnungen (28) in den Kabelschienenkomponenten eingesetzt sind, um dort federnd gehalten zu werden.

7. Kabelschienensystem nach Anspruch 6, **gekennzeichnet durch** Fang-und Sicherungshaken (76), welche zumindest in jene anderen ausgewählten Öffnungen (28) in den Kabelschienenkomponenten (10, 12) eingesetzt sind, in welche die Ausformungen (52, 54) an den Schenkelenden eingesetzt sind und welche zwischen den Federschenkeln (42, 44) liegen.

## Revendications

1. Moyen élastique de couplage d'éléments de chemin de câbles (10, 12) d'un système de chemin de câbles, comprenant une pièce de forme élastique (24) constituée à partir d'une tige de matériau élastique et ayant une portion (46), correspondant aux ouvertures alignées (26, 28) des éléments de chemin de câbles (10, 12) se recouvrant pour coupler ceux-ci, et des bras (42, 44) qui partent de ladite portion (46) vers ses extrémités libres (52, 54), caractérisé en ce que lesdites extrémités libres ont des décrochements (56, 58) qui sont adaptés à être insérés élastiquement dans une ouverture (26, 28) d'au moins un desdits éléments.

2. Moyen élastique selon la revendication 1, caractérisé en ce que la pièce élastique (24) a la forme d'une longueur de tige d'acier élastique formée pratiquement en V formant deux bras (42, 44) de longueur égale, et à la jonction des bras, la tige d'acier élastique est repliée pour former un décrochement (46) comprenant des première et seconde parties (48, 50), à angle droit l'une par rapport à l'autre, et formant ladite portion.

3. Moyen élastique selon les revendications 1 ou 2, caractérisé en ce que les décrochements (56, 58) à chaque extrémité formant chacun un décrochement à angle droit.

4. Moyen élastique selon la revendication 3, caractérisé en ce que les décrochements (56, 58) des extrémités se font face mais dans les directions opposées.

5. Assemblage caractérisé par des extrémités alignées d'éléments de chemin de câbles (10, 12) reliées par au moins une pièce de liaison (14) et un moyen élastique (24) tel que revendiqué dans l'une quelconque des revendications 1 à 4, ou par un chemin de câbles (10) relié à un cadre (102) ou à un élément accessoire (68) par un moyen élastique (24) tel que revendiqué dans l'une quelconque des revendications 1 à 4.

6. Système de chemin de câbles, caractérisé en ce que les éléments (10, 12) du système sont reliés par des ressorts en fil rond laminé (24) de configuration générale en V qui sont attachés dans des dispositifs de couplage par insertion d'une extrémité formée (46) au sommet de la forme en V, dans une des ouvertures sélectées (26) des éléments (10, 12) du système de chemin de câbles, les pattes (42, 44) des formes en V sont poussées l'une vers l'autre et les structures (52, 54) aux extrémités des pattes sont insérées dans certaines ouvertures sélectées (26) parmi d'autres des éléments du système de chemin de câbles afin de s'y maintenir de façon élastique.

7. Système selon la revendication 6, caractérisé par des attaches (76) d'indication et de protection qui sont insérées au minimum dans certaines ouvertures sélectées (28) parmi d'autres des éléments (10, 12) du système de chemin de câbles où les structures (52, 54) aux extrémités des pattes sont insérées et se trouvent entre les pattes élastiques (42, 44).
